# EUROPEAN PATENT SPECIFICATION

(11) **EP 3 896 146 B1**
(45) Date of publication and mention of the grant of the patent: **02.12.2026**
(21) Application number: 19896106.2
(22) Date of filing: 29.09.2019
(51) Int. Cl.: G02B 21/16, G02B 21/24, G02B 27/14, G01N 21/64

(54) **OPTICAL SYSTEM, METHOD FOR CALIBRATING OPTICAL SYSTEM, AND SEQUENCING SYSTEM**
OPTISCHES SYSTEM, VERFAHREN ZUR KALIBRIERUNG EINES OPTISCHEN SYSTEMS UND SEQUENZIERUNGSSYSTEM
SYSTÈME OPTIQUE, PROCÉDÉ D'ÉTALONNAGE DE SYSTÈME OPTIQUE ET SYSTÈME DE SÉQUENÇAGE

(30) Priority: 12.12.2018 CN 201811516793; 12.12.2018 CN 201822089550 U
(43) Date of publication of application: 20.10.2021
(73) Proprietor: GeneMind Biosciences Company Limited, Shenzhen City, Guangdong 518023 (CN)
(72) Inventor: QI, Jifang, Shenzhen City, 518023 Guangdong Province (CN); ZHOU, Zhiliang, Shenzhen City, 518023 Guangdong Province (CN); JIANG, Zefei, Shenzhen City, 518023 Guangdong Province (CN); YAN, Qin, Shenzhen City, 518023 Guangdong Province (CN)
(74) Representative: Novagraaf Group
(86) International application number: PCT/CN2019/109045
(87) International publication number: WO 2020/119226

(56) References cited:
- WO-A1-2009/042862
- WO-A1-2021/057200
- WO-A2-2004/048936
- CN-A- 104 293 648
- CN-A- 105 371 757
- CN-A- 106 460 034
- CN-A- 108 286 936
- CN-U- 209 759 461
- SAITO K ET AL: "Dual-colour microscopy of single fluorophores bound to myosin interacting with fluorescently labelled actin using anti-Stokes fluorescence", JOURNAL OF MICROSCOPY, BLACKWELL SCIENCE, GB, vol. 188, no. 3, 1 December 1997 (1997-12-01), pages 255 - 263, XP002276875, ISSN: 0022-2720, DOI: 10.1046/J.1365-2818.1997.2580814.X
- SANDERSON M. J. ET AL: "Fluorescence Microscopy", COLD SPRING HARBOR PROTOCOLS, vol. 2014, no. 10, 1 October 2014 (2014-10-01), XP055779847, DOI: 10.1101/pdb.top071795

## Description

### TECHNICAL FIELD

The present disclosure relates to an optical system, a method for calibrating an optical system, and a sequencing system.

### BACKGROUND

An optical imaging system can realize submicron resolution and is a powerful tool for researches. For example, in the field of biological sample detection, some optically detectable groups/compounds/structures are used to label target biomolecules, and signals from these labels are acquired using an optical imaging system, thereby tracking or detecting the target biomolecules.

Scientific paper "Dual-colour microscopy of single fluorophores bound to myosin interacting with fluorescently labelled actin using anti-Stokes fluorescence" by Saitok et al., JOURNAL OF MICROSCOPY, BLACKWELL SCIENCE, GB, vol. 188, no. 3, 1 December 1997 (1997-12-01), pages 255-263, ISSN: 0022-2720, DOI: 10.1046/J.1365-2818.1997.2580814.X discloses a prismless total internal reflection fluorescence microscopy with extremely low background to visualize single fluorophores attached to protein molecules interacting with a filamentous biopolymer labelled with different colour fluorophores. By using Stokes and anti-Stokes fluorescence, two different colour fluorescences from two different colour fluorophores excited with a single wavelength laser can be observed simultaneously. This microscopy is applied to visualize motor proteins, actin and myosin molecules.

International publication WO 2009/042862 A1 discloses an excitation and detection system for separately detecting different -wavelengths of emission light emitted from a sample. The system comprises a detection assembly to receive emission light emitted from the sample, the detection assembly including a multi-band dichroic member and at least first and second detection cameras, the multi-band dichroic member having a transmission/reflection characteristic with at least two transmissive regions separated from each other along the wavelength spectrum and with at least one reflective region separated from the transmissive regions along the wavelength spectrum, the dichroic member transmitting emission light that aligns with the at least two transmissive regions to the first detection camera, the dichroic member reflecting emission light that aligns with the reflective region to the second detection camera.

Scientific paper "Fluorescence Microscopy" by Sanderson M. J. et al., Cold Spring Harbor Protocols, vol. 2014, no. 10, 1 October 2014 (2014-10-01), pages pdb.top071795-pdb.top071, DOI: 10.1101/pdb.top071795 deals with the topic of fluorescence microscopy as a major tool with which to monitor cell physiology. Although the concepts of fluorescence and its optical separation using filters remain similar, microscope design varies with the aim of increasing image contrast and spatial resolution. The paper outlines the basics of wide-field microscopy to emphasize the selection, advantages, and correct use of laser scanning confocal microscopy, two-photon microscopy, scanning disk confocal microscopy, total internal reflection, and super-resolution microscopy. In addition, the principles of how these microscopes form images are reviewed to appreciate their capabilities, limitations, and constraints for operation.

On a platform for nucleic acid sequencing based on optical imaging (*e.g.,* a sequencing platform based on sequencing by synthesis), sequencing is generally implemented by adding a nucleotide modifier with an optically detectable label (*e.g.,* a fluorescent molecule) for binding a template (target nucleic acid sequence), and determining the bases at corresponding positions of the template via exciting the fluorescent molecule. It is desirable that the optical imaging system of the sequencing platform may feature compactness, insusceptibility to other components and close fit with other related components, thereby implementing stable, continuous and quick signal acquisition and outputting clear images. There's still a need for designing and building an optical imaging system with solutions or improvements for the aforementioned purposes.

### SUMMARY

The present invention provides an optical system for gene sequencing, a method for calibrating an optical system and a sequencing system.

According to the present invention, provided is an optical system comprising a first light source, a first lens, and a light splitting module, wherein the light splitting module comprises a first splitter, a second lens, a first camera and a second camera, the first lens is configured for receiving a first light beam from the first light source and collimating the first light beam onto a sample, and for receiving and collimating a light beam from the sample, the second lens is configured for focusing the collimated light beam from the first lens to the first camera and the second camera, the first splitter is configured for splitting the focused light beam from the second lens into a second light beam and a third light beam, the first camera is configured for receiving the second light beam, and the second camera is configured for receiving the third light beam, the optical system further comprises a compensation element positioned between the first splitter and the first camera, and configured for compensating astigmatism introduced into the second light beam, wherein the compensation element is a parallel flat plate or a dichroic mirror, wherein the first light source comprises a first light emitter configured to emit the first light beam and a third lens, the optical system comprises a fourth lens, wherein the third lens is configured to collimate the first light beam, wherein the fourth lens is configured to focus the collimated first light beam on a back focal plane of the first lens and the first lens is configured to collimate the focused first light beam onto the sample.

In the optical system based on the splitting optical path design, the light beam passes through the second lens and then through the splitter, resulting in a shortened overall length of the optical path and a reduced spatial requirement, thus facilitating the miniaturization of the optical system.

Generally, the sample carries an optically detectable label, for example, one or more fluorescent molecular labels. Laser is a conventional fluorescence excitation light source. The fluorescent molecular labels can be excited by the laser to emit fluorescence with different wavelengths.

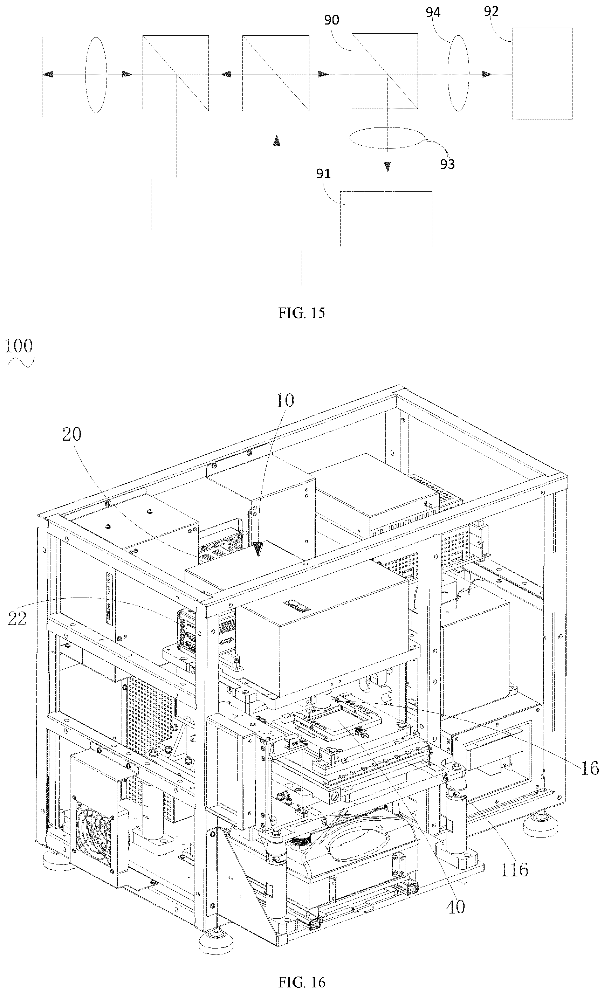

The inventor further builds and designs another optical system, in which the splitting is performed in a parallel optical path of a microscope (between objective and tube lenses), as shown in FIG. 15. Fluorescence is split in the parallel optical path of the microscope, namely the fluorescence is collimated after passing through the objective lens, and is split by a splitter 90 to form a plurality of splitting optical paths. Each light beam in the splitting optical paths is focused to a camera 91 or 92 through a tube lens 93 or 94.

The inventor found, through comparative tests, that the optical system comprising a splitting optical path resulting from splitting in a converging optical path has an optical path of a smaller overall length, smaller dimensions and a small number of optical elements, thus facilitating the miniaturization and industrial manufacture of the optical system.

The present invention further provides a sequencing system comprising a platform for carrying a sample and the optical system according to any one of the aforementioned embodiments. The above description of the technical features and advantages of the optical system according to any one of the embodiments of the present disclosure is further applicable to the sequencing system in this embodiment, and will not be repeated hereinafter.

The present invention further provides a method for calibrating an optical system, wherein the optical system comprises a light splitting module comprising a second lens, a first splitter, a first camera and a second camera, and the second lens, the first splitter, and the first camera are sequentially arranged along an optical axis of the second lens, wherein the light splitting module further comprises a compensation element positioned between the first splitter and the first camera, and the first camera receives the second light beam passing through the compensation element to acquire the first image, the compensation element is a parallel flat plate or a dichroic mirror and is configured for compensating astigmatism introduced into the second light beam, the method comprising: emitting a collimated light beam to the second lens using a collimator comprising a target, the target comprising a plurality of patterns; converging the collimated light beam to the first splitter through the second lens and splitting the collimated light beam into a second light beam and a third light beam through the first splitter; receiving, by the first camera, the second light beam to acquire a first image of the pattern; receiving, by the second camera, the third light beam to acquire a second image of the pattern; and adjusting an angle and position of the first camera and/or the second camera to make the contrasts of the first image and the second image consistent, such that a difference between MTF values of the first image of the patterns and the second image of the patterns is less than 10% According to the method for calibrating the optical system, the light splitting module is adjusted as a module independent from the whole optical system, which eliminates the limit of adjusting the whole optical system, conveniently realizes the perpendicularity of a plurality of cameras and an optical axis, and is suitable for calibrating an optical system comprising a splitting optical path.

Additional aspects and advantages of embodiments of the present disclosure will be partially set forth in the following description, and will partially become apparent from the following description or be appreciated by practice of the present disclosure.

### BRIEF DESCRIPTION OF THE DRAWINGS

The aforementioned and/or additional aspects and advantages of the present disclosure will become apparent and easily understood from the description of the embodiments in reference to the following drawings, among which:
FIG. 1 is a structural schematic of the optical system according to an embodiment not according to the present invention;
FIG. 2 is a structural schematic of the first light source **;**
FIG. 3 is a structural schematic of an optical system according to the present invention;
FIG. 4 is a structural schematic of the second light source **;**
FIG. 5 is a schematic showing a simulation result of the spot size of the imaging light beam when the optical system according to an embodiment not according to the present invention where the optical system does not comprise a first splitter;
FIG. 6 is a schematic showing a simulation result of the spot size of the imaging light beam when the optical system according to an embodiment of the present invention comprises the first splitter;
FIG. 7 is a schematic showing a simulation result of the spot size of the imaging light beam when a compensation lens is introduced into an optical system not being part of the present invention;
FIG. 8 is a partial three-dimensional schematic of the optical system according to an embodiment of the present invention;
FIG. 9 is a front view of the optical system of FIG. 8;
FIG. 10 is a top view of the optical system of FIG. 8;
FIG. 11 is a structural schematic of the light splitting module during a method according to an embodiment of the present invention;
FIG. 12 is a structural schematic of the collimator ;
FIG. 13 is a schematic of a pattern of the target with resolution line pairs ;
FIG. 14 is a more detailed structural schematic of the light splitting module during the method according to an embodiment of the present invention;
FIG. 15 is a structural schematic of an optical system of the related art; and
FIG. 16 is a three-dimensional schematic of a sequencing system according to an embodiment of the present invention.

### DETAILED DESCRIPTION

The embodiments of the present disclosure are described in detail below, and the examples of the embodiments are shown in the accompanying drawings, throughout which identical or similar reference numerals represent identical or similar elements or elements having identical or similar functions. The embodiments described below by reference to the accompanying drawings are exemplary and are merely intended to explain the present disclosure rather than be construed as limiting the present disclosure.

In the description of the present disclosure, the terms "first" and "second" are used for descriptive purposes only rather than construed as indicating or implying relative importance or sequence, or implicitly indicating the number of indicated technical features. Therefore, features defined with "first" and "second" may explicitly or implicitly include one or more of the features. In the description of the present disclosure, "a plurality of' means two or more than two, unless otherwise specifically defined.

In the description of the present disclosure, unless otherwise defined, the terms "mounted", "joined" and "connected" should be comprehended in their broad sense. For example, "connect" may be "fixedly connect", "detachably connect" or "integrally connect"; "mechanically connect", "electrically connect" or "communicate with each other"; or "directly interconnect", "indirectly interconnect through an intermediate", "the communication between the interiors of two elements" or "the interaction between two elements". For those of ordinary skill in the art, the specific meanings of the aforementioned terms in the present disclosure can be understood according to specific conditions.

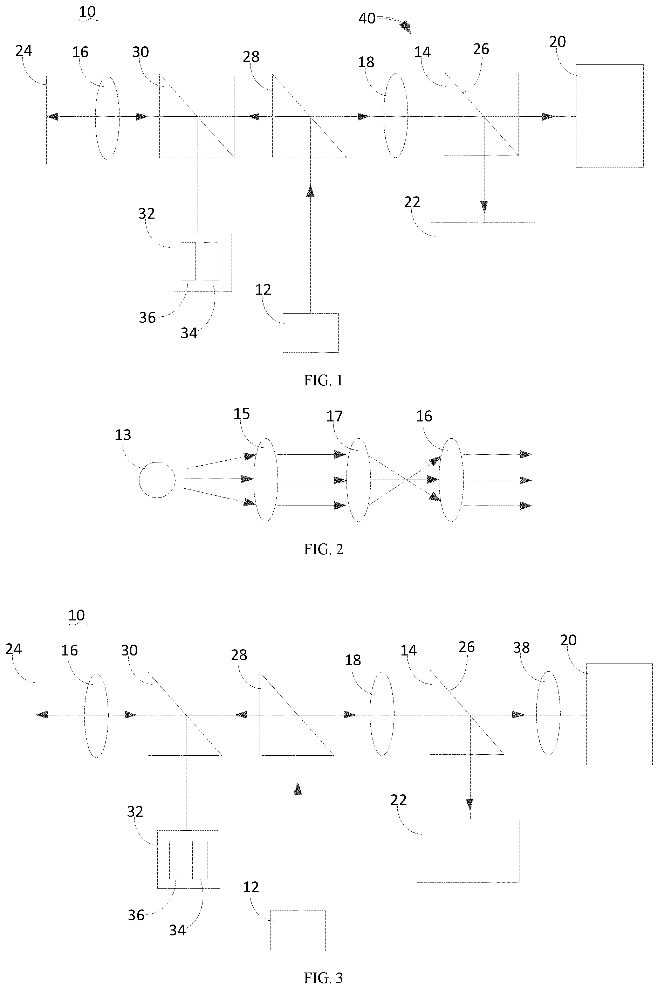

Referring to FIG. 1, provided in one embodiment not according to the present invention is an optical system 10 comprising a first light source 12, a first lens 16 and a light splitting module 40, wherein the light splitting module 40 comprises a first splitter 14, a second lens 18, a first camera 20 and a second camera 22. The first lens 16 is configured for receiving a first light beam from the first light source 12 and collimating the first light beam onto a sample 24, and for receiving and collimating a light beam from the sample 24. The second lens 18 is configured for focusing the collimated light beam from the first lens 16 to the first camera 20 and the second camera 22. The first splitter 14 is configured for splitting the focused light beam from the second lens 18 into a second light beam and a third light beam. The first camera 20 is configured for receiving the second light beam. The second camera 22 is configured for receiving the third light beam.

According to the optical system 10, the light beam is focused by the second lens 18, and then split by the splitter 14 into the second light beam and the third light beam. As such, the use of optical elements and the length of the splitting optical path can be reduced, which shortens the total optical path of the optical system, and facilitates miniaturization and industrial manufacture of the optical system 10.

Specifically, the sample 24 may be a nucleic acid sample, and the nucleic acid sample may be placed in a reaction device, such as a flowcell. The first light source 12 may be a laser light source. In one example, the flowcell comprises a substrate, wherein the substrate is provided with a channel, and the substrate is provided with glass.

When sequencing is performed using a sequencing system of the optical system, the target nucleic acid, an enzyme, a nucleotide reagent or solution with a fluorescent label and others are mixed in the channel for reaction under a certain condition. The first light source 12 emits a laser onto a specific field of view of the flowcell through the first lens 16, and fluorophores in the field of view are excited to emit fluorescence. The fluorescence is focused to the first splitter 14 through the first lens 16 and the second lens 18. The first splitter 14 splits the converged fluorescence light beam into the second light beam and the third light beam. The first camera 20 receives the second light beam and the second camera 22 receives the third light beam to acquire a first image and a second image of the field of view respectively.

FIG. 2 shows that the first light source 12 comprises a first light emitter 13 and a third lens 15. The first light beam is a light beam emitted by the first light emitter 13 and collimated by the third lens 15. The first light beam is focused on a back focal plane of the first lens 16 by a fourth lens 17 and then collimated onto the sample 24 by the first lens 16. In one example, the first light source 12 further comprises a fiber coupler, for example, a single mode fiber coupler. Specifically, the optical system 10 is a total internal reflection optical system. The collimated light beam (parallel light beam) passing through the first lens 16 is incident on the surface of the glass/cover-glass at an angle larger than the critical angle, thus generating total internal reflection and an evanescent field (evanescent wave) at the lower/bottom surface of the (flowcell) glass/cover-glass. The fluorescence emitted by the excited fluorescent molecule in the evanescent field is received by the first lens 16.

When the light beam emitted by the first light source 12 excites the fluorophores of the sample 24, the light beam received by the first lens 16 is the light beam emitted by the fluorophores of the sample 24.

Image sensors of the first camera 20 and the second camera 22 may be CCDs or CMOSs. Preferably, the image sensors of the first camera 20 and the second camera 22 are of the same type, for example, both CCDs or both CMOSs. The first splitter 14 may be a dichroic mirror.

In the illustrated embodiment, the second light beam is the transmitted light beam of the first splitter 14, and the third light beam is the reflected light beam of the first splitter 14.

In some embodiments, the first camera 20 and the second camera 22 are arranged at 90 degrees or 270 degrees.

This facilitates disposing a plurality of cameras including the first camera 20 and the second camera 22 into the optical system within a limited space. Specifically, in the orientation shown in FIG. 1, the first splitter 14 has a first reflecting surface 26 at an included angle of 45 degrees to the horizontal plane. A part of the light beam incident on the first reflecting surface 26 in the horizontal direction is reflected and deflected by 90 degrees, reaching the second camera 22, and another part of the light beam incident on the first reflecting surface 26 in the horizontal direction passes through the first reflecting surface 26 and is incident on the first camera 20. In FIGs. 1 and 3, the first camera 20 and the second camera 22 are arranged at 90 degrees in the clockwise direction or 270 degrees in the counterclockwise direction. In one example, the sample has two fluorescent labels, for example Cy3 and Atto647N, with emission bands of 550-620 nm and 650-750 nm, respectively (peaks of about 564 nm and 670 nm, respectively). The first splitter 14 is a dichroic mirror having a high transmittance for spectrum ranged 550-620 nm and a high reflectance for spectrum above 650 nm.

The nucleotide reagents with the fluorescent labels include A, T, C and G reagents in separate containers. In one example, the four nucleotides have the same fluorescent label. In DNA sequencing, each sequencing reaction includes four base extension reactions, which are sequential additions of the four nucleotides and the acquisitions of corresponding images.

In one example, the four nucleotides are divided in two pairs, and the two nucleotides of each pair respectively carry a first fluorescent label and a second fluorescent label. The first fluorescent label and the second fluorescent label can be excited to emit different fluorescence. In a two-color sequencing using the four nucleotides, each sequencing reaction comprises two base extension reactions. When a sequencing is performed using a sequencing system comprising the optical system 10, the target nucleic acid, an enzyme, two nucleotide reagents or solutions with the first fluorescent label or the second fluorescent label and others are mixed in the channel for reaction under a certain condition. The first light source 12 simultaneously emits a first laser and a second laser onto a specific field of view on the flowcell through the first lens 16. The first fluorescent label and the second fluorescent label of the field of view are respectively excited by the first laser and the second laser to emit a first fluorescence and a second fluorescence. The first fluorescence and the second fluorescence are converged to the first splitter 14 (dichroic mirror) through the first lens 16 and the second lens 18. The dichroic mirror splits the converged first fluorescence and second fluorescence. The first fluorescence is focused onto an image plane of the first camera 20 and the second fluorescence is focused onto an image plane of the second camera 22, thereby giving a first image and a second image of the first fluorescence and the second fluorescence of the field of view, respectively. Base identification/sequencing is implemented based on the nucleotide addition sequence and information of the first image and the second image of different sequencing reactions.

In another example, the four nucleotides carry fluorescent label a, fluorescent label b, fluorescent labels a-b and no label, respectively, wherein the fluorescent label a and the fluorescent label b can be excited to emit different fluorescences. In a four-color sequencing using the four nucleotides, each sequencing reaction comprises one base extension reaction. When sequencing is performed using a sequencing system comprising the optical system 10, the target nucleic acid, an enzyme, the four nucleotide reagents or solutions and others are mixed in the channel for reaction under a certain condition. The first light source 12 simultaneously emits a first laser and a second laser onto a specific field of view of the flowcell through the first lens 16. The fluorescent labels in the field of view are excited by the first laser and the second laser to emit fluorescences. The fluorescences are converged to the first splitter 14 (dichroic mirror) through the first lens 16 and the second lens 18. The dichroic mirror splits the fluorescences into fluorescence from the fluorescent label a and fluorescence from the fluorescent label b. The fluorescence from the fluorescent label a is focused onto an image plane of the first camera 20 and the fluorescence from the fluorescent label b is focused onto an image plane of the second camera 22, thereby giving a first image and a second image of the field of view, respectively. Base identification/sequencing is implemented based on the first image and the second image of different sequencing reactions and by combining information of the first image and the second image of the same sequencing reaction.

The first lens 16 comprises one or more lenses, and the second lens 18 comprises one or more lenses. Specifically, in a microscope system, the one or more lenses of the first lens 16 form an objective lens; and the one or more lenses of the second lens 18 form a tube lens. In some other embodiments, the first lens 16 comprises one or more lenses, or the second lens 18 comprises one or more lenses.

In some embodiments, the optical system 10 comprises a second splitter 28 configured for receiving the first light beam from the first light source 12 and deflecting the first light beam to the first lens 16, such that the first light beam is integrated into an optical path (imaging optical path) in which an optical axis of the first lens is positioned. As such, the introduction of the second splitter 28 enables the arrangement of the first light source 12 outside the optical path in which the optical axis of the first lens 16 is positioned, allowing a compact and reasonable arrangement of elements of the optical system 10, facilitating the miniaturization and the industrial application of the optical system 10.

Specifically, the second splitter 28 is configured for deflecting the first light beam by 90 degrees. As such, the position at which the first light source 12 is conveniently arranged comprises the relative positions of the components of the first light source.

In some embodiments, the optical system 10 comprises a third splitter 30 and an autofocus module 32. The autofocus module 32 is configured for emitting a fourth light beam, and for receiving the fourth light beam reflected by the surface of the glass wherein the sample 24 immobilized. The third splitter 30 is configured for receiving the fourth light beam and deflecting the fourth light beam to the first lens 16, and is further configured for receiving the fourth light beam reflected by the surface and deflecting the fourth light beam to the autofocus module 32. As such, focusing (focus tracking) can be realized by using the autofocus module 32, and image acquisition can be realized by using the optical system 10.

Specifically, the autofocus module 32 comprises a second light source 34 and a receiver 36, wherein the second light source 34 is configured for emitting the fourth light beam to the third splitter 30, and the receiver 36 is configured for receiving the fourth light beam collimated by the first lens 16. In one example, the second light source 34 may be an infrared light source. The receiver 36 may be a photodiode. During focusing (focus tracking), the second light source 34 emits the fourth light beam that is deflected to the first lens 16 by the third splitter 30 and then converged to the surface through the first lens 16. The fourth light beam reflected by the surface is collimated to the third splitter 30 by the first lens. At this time, by determining the change in the information of the fourth light beam reflected by the surface received by the receiver 36, a movable platform carrying the sample move the sample 24 toward or away from the first lens 16, to make the sample 24 in focus.

In one example, the receiver 36 comprises a sensor, for example, a two-dimensional PSD sensor, and the second light source 34 comprises an LED (light source) and a mask positioned in front of the LED. The light emitted by the LED penetrates the mask to form a secondary source with a specific pattern. The secondary source with the specific pattern are deflected to the first lens 16 through the third splitter 30 and converged on the sample 24, and reflected to the sensor by the sample 24. The autofocus module 32 further comprises a signal processing module, wherein the sensor is connected to the signal processing module to acquire information of the secondary source through the signal processing module. Further, the autofocus module 32 further comprises a signal output module for outputting the change of the information of the secondary source, such that the platform carrying the sample moves the sample to the focal plane of the imaging optical path (for example, a fluorescence optical path).

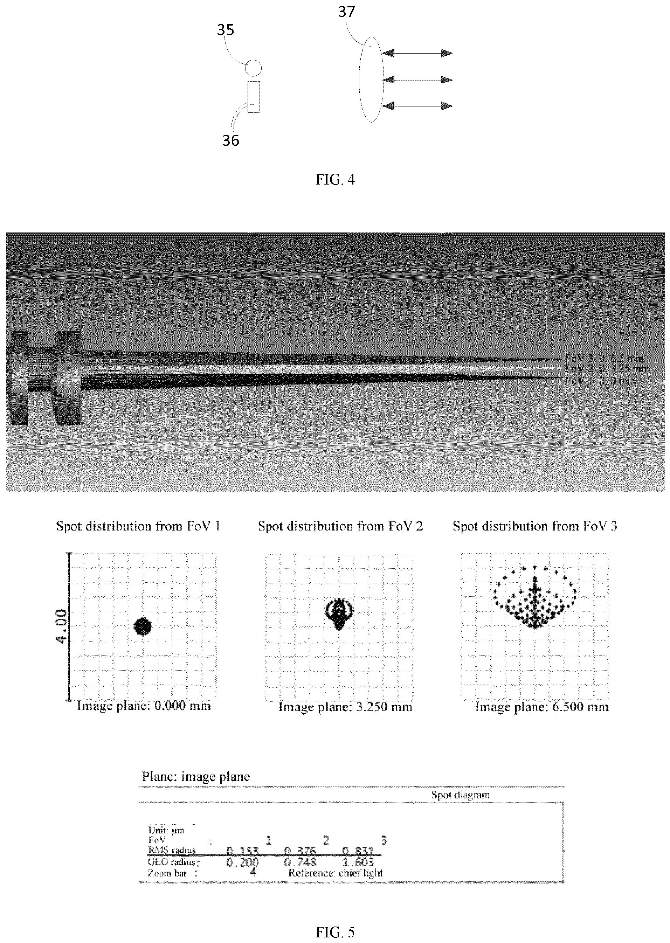

In some embodiments, as shown in FIG. 4, the second light source 34 comprises a second light emitter 35 and a fifth lens 37, wherein the fourth light beam is a light beam emitted by the second light emitter 38 and collimated by the fifth lens 37. The fourth light beam reflected by the sample 24 is converged to the receiver 36 through the fifth lens 37.

As shown in FIG. 3, the second light beam is the focused light beam from the second lens 18 transmitting through the first splitter 14. The optical system 10 comprises a compensation element 38, being represented by a lens symbol, positioned between the first splitter 14 and the first camera 20, and configured for compensating astigmatism introduced into the second light beam.

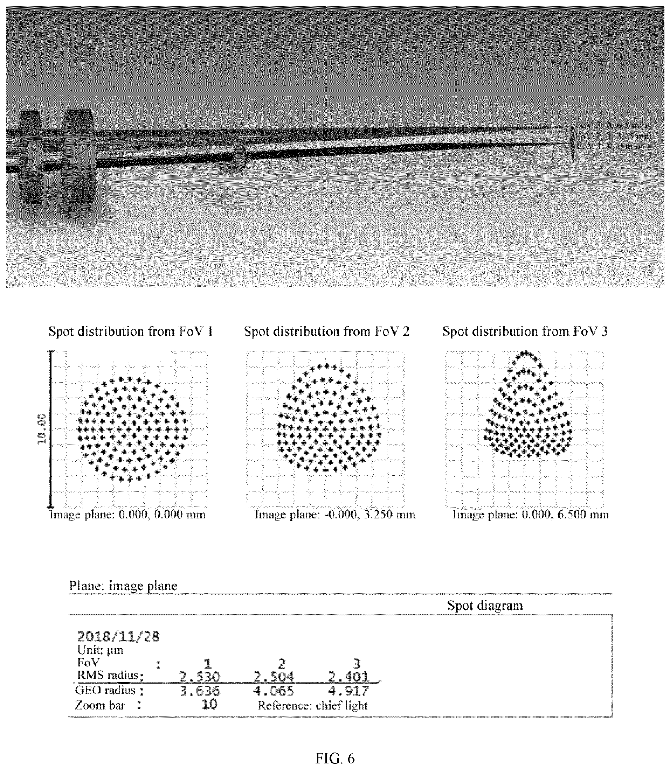

Specifically, in some examples, when (imaging) simulation is performed on the focused light beam of the second lens 18 by a software (for example, Zemax), the results of simulation with or without the first splitter 14 after the second lens 18 (whether the light beam is split or not after focusing) are respectively shown in FIGs. 5 and 6. It can be seen that, compared with spots (speckles/ diffraction spots) formed by the light beam only passing through the second lens 18, spots (speckles/ diffraction spots) formed by the light beam from the same field of view (FoV) passing through the second lens 18 and the first splitter 14 demonstrate significantly increased astigmatism. For example, the spot sizes at coordinates (0,0), (0,3.250) and (0,6.500) in FIG. 6 are larger than the spot sizes at the corresponding coordinates in FIG. 5. By using RMS radius (root mean square radius), the spot size actually imaged by an optical system can be quantitatively described. The RMS radius is an important radius parameter, and is a square root of the quadratic sum of the coordinates of the speckles (with reference to the center point) divided by the number of speckles. This radius reflects the size of a typical speckle, so as to quantitatively reflect the resolution of the system. In addition, GEO radius may be used to represent the diameter of the diffuse spot. It is clear that, for the spots formed by the focusing of the light beams of the same field of view, FIG. 6 demonstrates a more significant astigmatism(astigmation) with a larger RMS radius compared with FIG. 5.

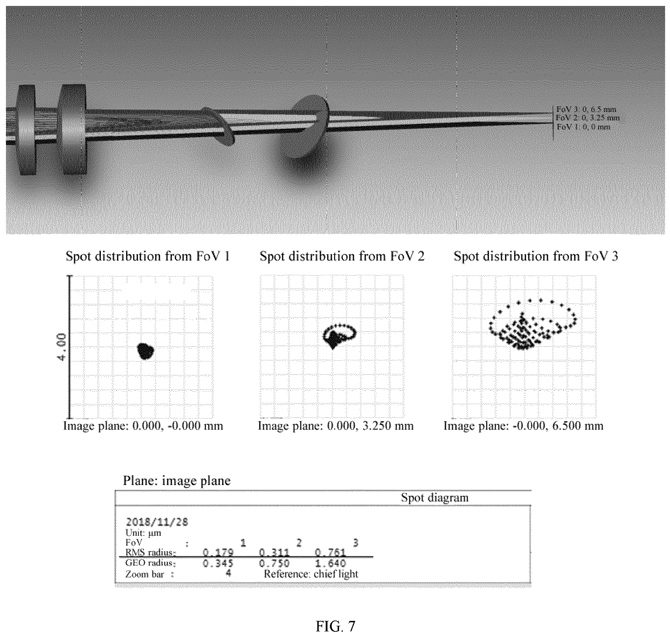

On this basis, the inventor introduced the compensation element 38 at any position between the second lens 18 and the first camera in the hope of compensating for the astigmatism caused by imaging after the transmission of the light beam. After the compensation element 38 is introduced, as shown in FIG. 7, for spots formed by the light beams from the same field of view, the spot size of FIG. 7 is significantly smaller than that of FIG. 6, and at the same coordinates, the spot size of FIG. 7 approaches or even is smaller than that of FIG. 5 regarding the RMS radius.

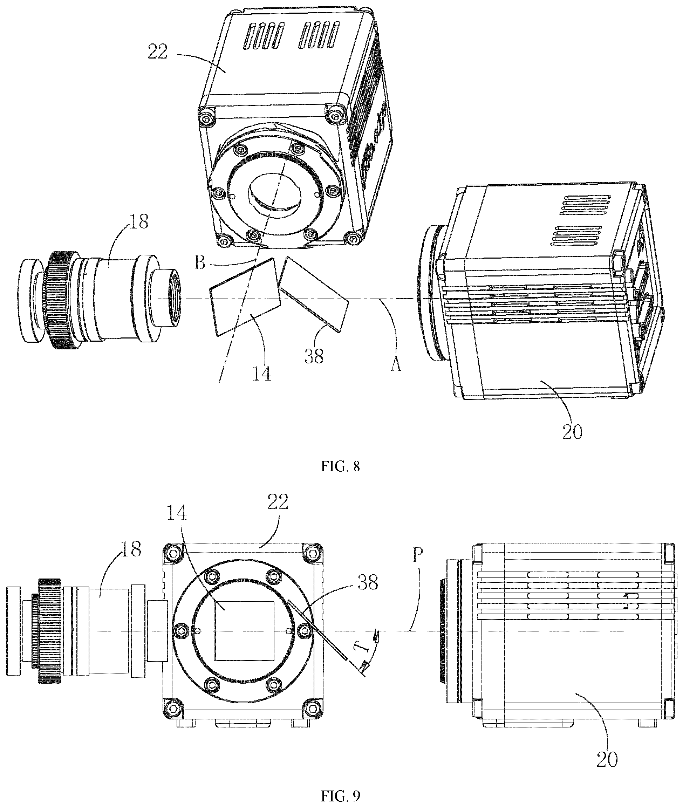

The compensation element 38 is a parallel flat plate or a dichroic mirror. In the embodiments of FIGs. 8-10, the compensation lens 38 is a dichroic mirror. The compensation element 38 is at an included angle T of 45 degrees to a plane P perpendicular to the first splitter 14, and the plane P is defined by an optical axis A of the second light beam and an optical axis B of the third light beam.

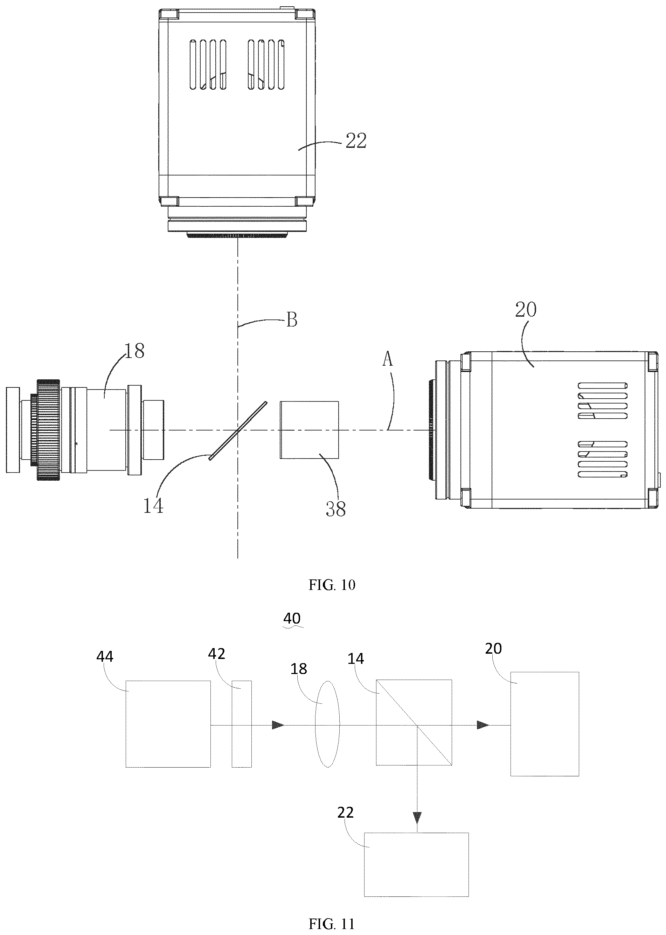

One embodiment of the present disclosure, as shown in FIG. 11, further provides a method for calibrating an optical system, wherein the optical system comprises a light splitting module 40 comprising a second lens 18, a first splitter 14, a first camera 20 and a second camera 22, and the second lens 18, the first splitter 14, and the first camera 20 are sequentially arranged along an optical axis of the second lens 18. Although not explicitly shown, the light splitting module (40) further comprises the compensation element (38) positioned between the first splitter (14) and the first camera (20), and the first camera (20) receives the second light beam passing through the compensation element (38) to acquire the first image, the compensation element is a parallel flat plate or a dichroic mirror and is configured for compensating astigmatism introduced into the second light beam (see FIG.3). The method comprising: emitting a collimated light beam to the second lens 18 using a collimator 50 comprising a target 42, the target 42 comprising one or more patterns; converging the collimated light beam to the first splitter 14 through the second lens 18 and splitting the converged light beam into a second light beam and a third light beam through the first splitter 14; receiving, by the first camera 20, the second light beam to acquire a first image of the patterns; receiving, by the second camera 22, the third light beam to acquire a second image of the patterns; and adjusting an angle and position of the first camera 20 and/or the second camera 22 to make the contrasts of the patterns in the first image and in the second image consistent, such that a difference between MTF values of the first image of the patterns and the second image of the patterns is less than 10%.

According to the method for calibrating the optical system, the light splitting module 40 is adjusted as a module independent from the whole optical system 10, which eliminates the limit of adjusting the whole optical system, conveniently realizes the alignment of the lens included in the optical system and cameras to meet a specified requirement(e.g., make a plurality of cameras perpendicular to an optical axis), and is desirable for quickly calibrating an optical system comprising a splitting optical path.

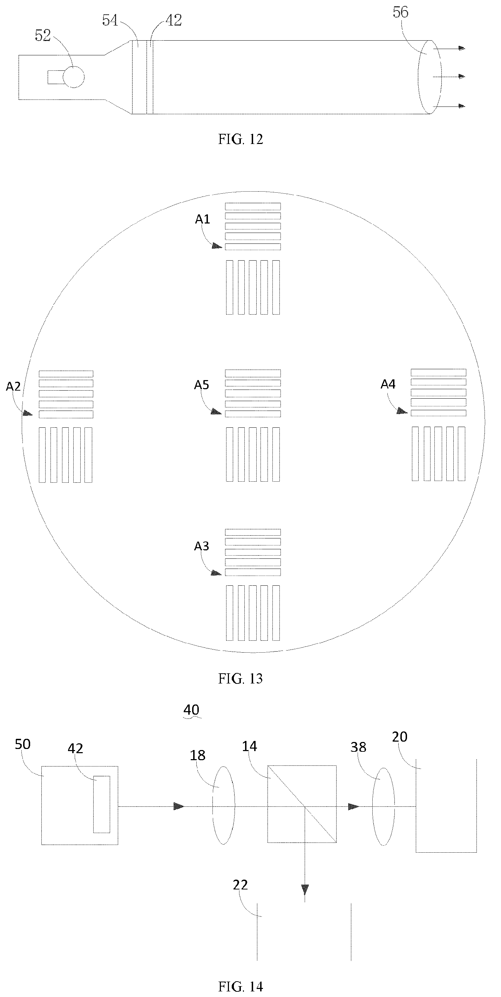

Specifically, in this embodiment, as shown in FIG. 12, the collimator 50 further comprises a third light source 52, a ground glass 54 (frosted glass/scattering glass) and an objective lens 56, wherein the third light source 52, the ground glass 54, the target 42 and the objective lens 56 are sequentially arranged, and light beam emitted by the third light source 52 sequentially passes through the ground glass 54, the target 42 and the objective lens 56 and penetrates to the second lens 18. The collimated light beam emitted by the collimator 50 is a parallel light beam, and the parallel light beam is incident to the first splitter 14 through the second lens 18 and is split into the second light beam and the third light beam.

In this embodiment, the patterns of the target 42 of the first image acquired by the first camera 20 are consistent in contrast, and the patterns of the target 42 of the second image acquired by the second camera 22 are consistent in contrast, indicating that the plane of the image sensor of the first camera 20 is perpendicular to the optical axis of the second lens 18, and the plane of the image sensor of the second camera 22 is perpendicular to the optical axis of the splitting optical path.

In this embodiment, the target 42 is a customized target with resolution line pairs designed by the inventor, as shown in FIG. 13. The target with resolution line pairs comprises 5 patterns A1-A5 distributed at different positions. When the contrasts are consistent for corresponding images of patterns A1-A5 of the target 42 acquired by the first camera 20 and the second camera 22, it is determined that the plane of the image sensor of the first camera 20 is perpendicular to the optical axis of the second lens 18, and the plane of the image sensor of the second camera 22 is perpendicular to the optical axis of the light beam reflected by the first splitter 14, which meets the requirements for sequencing image acquisition.

In some embodiments, if the MTF values (Modulation Transfer Function values) of the multiple images of the patterns are the same, the contrast of the images is determined to be consistent. In some examples, if the difference of two or more MTF values is less than 10%, preferably less than 5%, the MTF values are determined to be the same. Specifically, the MTF values of the first image of the patterns A1-A5 are 0.80, 0.80, 0.80, 0.80 and 0.80, respectively, and the MTF values of the second image of the patterns A1-A5 are 0.80, 0.78, 0.78, 0.80 and 0.80, respectively. Thus the contrast of the first image and the second image is determined to be consistent, and the optical system 10 is calibrated. The closer the MTF value approaches 1, the better the performance of the optical system 10 is.

The target 42 has a plurality of patterns, as shown in FIG. 13. The size (pattern area) of the first image or the second image is the size of a circle formed by the 5 patterns A1-A5. When the optical system 10 is designed, it is required that the size of the first image and/or the second image is not less than forty percent of the size of the image actually required by the optical system 10 for imaging. As such, when imaging is performed by using the optical system 10, images of high quality can be acquired, and the requirements of sequencing are met.

Specifically, the size of the first image may refer to the size of an image formed by the distribution of the images of the plurality of patterns on the first camera 20. The size of the second image may refer to the size of an image formed by the distribution of the images of the plurality of patterns on the second camera 22. Preferably, the size of the first image and/or the second image is not less than fifty percent of the size of the image actually imaged by the optical system.

As shown in FIG. 14, the light splitting module 40 further comprises the compensation element 38 positioned between the first splitter 14 and the first camera 20, and the first camera 20 receives the second light beam passing through the compensation element 38 to acquire the first image. As such, the imaging of the first image features good effect.

In one embodiment of the present disclosure, as shown in FIG. 16, provided is a sequencing system 100 comprising a platform 116 for carrying a sample 24 and the optical system 10 according to the present invention.

Specifically, in this embodiment, the platform 116 is movable. The platform 116 moves the sample 24 relative to the optical system, for example, in a direction perpendicular to the optical axis of the first lens 16, or in a direction parallel to the optical axis of the first lens 16, or in a direction oblique to the optical axis of the first lens 16, such that different positions of the sample 24 are positioned directly under the first lens 16, and image acquisition on the sample 24 can be realized by the sequencing system 100 comprising the optical system 10, so as to perform the sequencing.

It can be understood that the sequencing system 100 in the embodiment of the present disclosure may comprise the optical system 10 according to any one of the aforementioned embodiments.

In the description of the present specification, the description with reference to the terms "one embodiment", "some embodiments", "exemplary embodiments", "example", "specific example", or "some examples" means that the specific features, structures, materials or characteristics described in combination with the embodiments or examples are included in at least one embodiment or example of the present disclosure. In this specification, the schematic description of the aforementioned terms do not necessarily refer to the same embodiment or example.

## Claims

1. An optical system (10), comprising a first light source (12), a first lens (16), and a light splitting module (40), wherein the light splitting module (40) comprises a first splitter (14), a first camera (20), and a second camera (22);
the first lens (16) is configured for receiving a first light beam from the first light source (12) and collimating the first light beam onto a sample (24), and for receiving and collimating a light beam from the sample (24);
the first splitter (14) is configured for splitting a light beam into a second light beam and a third light beam;
the first camera (20) is configured for receiving the second light beam; and
the second camera (22) is configured for receiving the third light beam;
wherein the first light source (12) comprises a first light emitter (13) configured to emit the first light beam;
the first light source (12) comprises a third lens (15), the optical system (10) comprises a fourth lens (17), wherein the third lens (15) is configured to collimate the first light beam, wherein the fourth lens (17) is configured to focus the collimated first light beam on a back focal plane of the first lens (16) and the first lens (16) is configured to collimate the focused first light beam onto the sample (24),
the optical system (10) being **characterized in that**
the light splitting module (40) comprises a second lens (18), wherein the second lens (18) is configured for focusing the collimated light beam from the first lens (16) to the first camera (20) and the second camera (22), and wherein the first splitter (14) is configured to split the focused light beam from the second lens (18) into the second light beam and the third light beam; the optical system (10) further comprises a compensation element (38) positioned between the first splitter (14) and the first camera (20), and configured for compensating astigmatism introduced into the second light beam, wherein the compensation element (38) is a parallel flat plate or a dichroic mirror.

2. The optical system (10) according to claim 1, comprising a second splitter (28) configured for receiving the first light beam from the first light source (12) and deflecting the first light beam to the first lens (16).

3. The optical system (10) according to claim 1 or 2, comprising a third splitter (30) and an autofocus module (32);
wherein the autofocus module (32) is configured for emitting a fourth light beam and for receiving the fourth light beam reflected by the sample (24); and
the third splitter (30) is configured for receiving the fourth light beam and deflecting the fourth light beam to the first lens (16), and is further configured for receiving the fourth light beam reflected by the sample (24) and deflecting the fourth light beam reflected by the sample (24) to the autofocus module (32).

4. The optical system (10) according to claim 3, wherein the autofocus module (32) comprises a second light source (34) for emitting the fourth light beam to the third splitter (30) and a receiver (36) for receiving the fourth light beam reflected by the sample (24).

5. The optical system (10) according to claim 3 or 4, wherein the first lens (16) is configured to converge the fourth light beam on the sample (24); and
the first lens (16) is configured to collimate the fourth light beam reflected by the sample (24) to the third splitter (30).

6. The optical system (10) according to claim 4, wherein the second light source (34) comprises a second light emitter (35) configured to emit the fourth light beam and a fifth lens (37), wherein the fifth lens (37) is configured to collimate the fourth light beam, and the fifth lens (37) is configured to converge the fourth light beam reflected by the sample (24) to the receiver (36).

7. The optical system (10) according to any of claims 1-6, wherein the first lens (16) comprises more than one lens, and/or the second lens (18) comprises more than one lens; and/or the first camera (20) and the second camera (22) are arranged at 90 degrees or 270 degrees.

8. The optical system (10) according to claim 2, wherein the second splitter (28) is configured for deflecting the first light beam by 90 degrees.

9. The optical system (10) according to claim 1, wherein the compensation element (38) is at an included angle of 45 degrees to a plane perpendicular to the first splitter (14), and the plane is defined by an optical axis (A) of the second light beam and an optical axis (B) of the third light beam.

10. A sequencing system, comprising a platform (116) for carrying a sample (24) and the optical system (10) according to any of claims 1-9.

11. A method for calibrating an optical system, wherein the optical system comprises a light splitting module (40), the light splitting module (40) comprises a second lens (18), a first splitter (14), a first camera (20) and a second camera (22), and the second lens (18), the first splitter (14) and the first camera (20) are sequentially arranged along an optical axis of the second lens (18), wherein the light splitting module (40) further comprises a compensation element (38) positioned between the first splitter (14) and the first camera (20), and the first camera (20) receives the second light beam passing through the compensation element (38) to acquire the first image, the compensation element (38) is a parallel flat plate or a dichroic mirror and is configured for compensating astigmatism introduced into the second light beam;
the method comprising:
emitting a collimated light beam to the second lens (18) using a collimator (50) comprising a target (42), the target (42) comprising a plurality of patterns;
converging the collimated light beam to the first splitter (14) through the second lens (18) and splitting the collimated light beam into a second light beam and a third light beam through the first splitter (14);
receiving, by the first camera (20), the second light beam to acquire a first image of the patterns;
receiving, by the second camera (22), the third light beam to acquire a second image of the patterns;
and
adjusting an angle and position of the first camera (20) and/or the second camera (22) to make the contrasts of the first image and the second image consistent, such that a difference between MTF values of the first image of the patterns and the second image of the patterns is less than 10%.

12. The method according to claim 11, wherein the target (42) has a plurality of patterns, and the size of the first image and/or the second image is not less than forty percent of the size of an image imaged by the optical system.

13. The method according to claim 11, wherein the compensation element (38) is at an included angle of 45 degrees to a plane perpendicular to the first splitter (14), and the plane is defined by an optical axis (A) of the second light beam and an optical axis (B) of the third light beam.

## Patentansprüche

1. Optisches System (10), umfassend eine erste Lichtquelle (12), eine erste Linse (16) und ein Lichtteilungsmodul (40), wobei das Lichtteilungsmodul (40) einen ersten Teiler (14), eine erste Kamera (20) und eine zweite Kamera (22) umfasst;
die erste Linse (16) zum Empfangen eines ersten Lichtstrahls von der ersten Lichtquelle (12) und Kollimieren des ersten Lichtstrahls auf eine Probe (24) und Empfangen und Kollimieren eines Lichtstrahls von der Probe (24) konfiguriert ist;
der erste Teiler (14) zum Aufteilen eines Lichtstrahls in einen zweiten Lichtstrahl und einen dritten Lichtstrahl konfiguriert ist;
die erste Kamera (20) zum Empfangen des zweiten Lichtstrahls konfiguriert ist; und
die zweite Kamera (22) zum Empfangen des dritten Lichtstrahls konfiguriert ist;
wobei die erste Lichtquelle (12) einen ersten Lichtemitter (13) umfasst, der konfiguriert ist, um den ersten Lichtstrahl zu emittieren;
die erste Lichtquelle (12) eine dritte Linse (15) umfasst, das optische System (10) eine vierte Linse (17) umfasst, wobei die dritte Linse (15) konfiguriert ist, um den ersten Lichtstrahl zu kollimieren, wobei die vierte Linse (17) konfiguriert ist, um den kollimierten ersten Lichtstrahl auf eine hintere Brennebene der ersten Linse (16) zu fokussieren, und die erste Linse (16) konfiguriert ist, um den fokussierten ersten Lichtstrahl auf die Probe (24) zu kollimieren, wobei das optische System (10) **dadurch gekennzeichnet, dass** das Lichtteilungsmodul (40) eine zweite Linse (18) umfasst, wobei die zweite Linse (18) zum Fokussieren des kollimierten Lichtstrahls von der ersten Linse (16) auf die erste Kamera (20) und die zweite Kamera (22) konfiguriert ist, und wobei der erste Teiler (14) konfiguriert ist, um den fokussierten Lichtstrahl von der zweiten Linse (18) in den zweiten Lichtstrahl und den dritten Lichtstrahl zu teilen; das optische System (10) ferner ein Kompensationselement (38) umfasst, das zwischen dem ersten Teiler (14) und der ersten Kamera (20) positioniert ist und zum Kompensieren von Astigmatismus konfiguriert ist, der in den zweiten Lichtstrahl eingebracht ist, wobei das Kompensationselement (38) eine parallele flache Platte oder ein dichroitischer Spiegel ist.

2. Optisches System (10) nach Anspruch 1, umfassend einen zweiten Teiler (28), der zum Empfangen des ersten Lichtstrahls von der ersten Lichtquelle (12) und Ablenken des ersten Lichtstrahls zu der ersten Linse (16) konfiguriert ist.

3. Optisches System (10) nach Anspruch 1 oder 2, umfassend einen dritten Teiler (30) und ein Autofokusmodul (32);
wobei das Autofokusmodul (32) zum Emittieren eines vierten Lichtstrahls und zum Empfangen des vierten Lichtstrahls konfiguriert ist, der durch die Probe (24) reflektiert wird; und
der dritte Teiler (30) zum Empfangen des vierten Lichtstrahls und Ablenken des vierten Lichtstrahls zu der ersten Linse (16) konfiguriert ist und ferner zum Empfangen des vierten Lichtstrahls, der durch die Probe (24) reflektiert wird, und Ablenken des vierten Lichtstrahls, der durch die Probe (24) reflektiert wird, zu dem Autofokusmodul (32) konfiguriert ist.

4. Optisches System (10) nach Anspruch 3, wobei das Autofokusmodul (32) eine zweite Lichtquelle (34) zum Emittieren des vierten Lichtstrahls zu dem dritten Teiler (30) und einen Empfänger (36) zum Empfangen des vierten Lichtstrahls, der durch die Probe (24) reflektiert wird, umfasst.

5. Optisches System (10) nach Anspruch 3 oder 4, wobei die erste Linse (16) konfiguriert ist, um den vierten Lichtstrahl auf der Probe (24) zu konvergieren; und
die erste Linse (16) konfiguriert ist, um den vierten Lichtstrahl, der durch die Probe (24) reflektiert wird, zu dem dritten Teiler (30) zu kollimieren.

6. Optisches System (10) nach Anspruch 4, wobei die zweite Lichtquelle (34) einen zweiten Lichtemitter (35), der konfiguriert ist, um den vierten Lichtstrahl abzugeben, und eine fünfte Linse (37) umfasst, wobei die fünfte Linse (37) konfiguriert ist, um den vierten Lichtstrahl zu kollimieren, und die fünfte Linse (37) konfiguriert ist, um den vierten Lichtstrahl, der durch die Probe (24) reflektiert wird, auf den Empfänger (36) zu konvergieren.

7. Optisches System (10) nach einem der Ansprüche 1 bis 6, wobei die erste Linse (16) mehr als eine Linse umfasst, und/oder die zweite Linse (18) mehr als eine Linse umfasst; und/oder die erste Kamera (20) und die zweite Kamera (22) bei 90 Grad oder 270 Grad angeordnet sind.

8. Optisches System (10) nach Anspruch 2, wobei der zweite Teiler (28) zum Ablenken des ersten Lichtstrahls um 90 Grad konfiguriert ist.

9. Optisches System (10) nach Anspruch 1, wobei das Kompensationselement (38) in einem eingeschlossenen Winkel von 45 Grad zu einer Ebene senkrecht zu dem ersten Teiler (14) ist und die Ebene durch eine optische Achse (A) des zweiten Lichtstrahls und eine optische Achse (B) des dritten Lichtstrahls definiert ist.

10. Sequenzierungssystem, umfassend eine Plattform (116) zum Tragen einer Probe (24) und das optische System (10) nach einem der Ansprüche 1 bis 9.

11. Verfahren zum Kalibrieren eines optischen Systems, wobei das optische System ein Lichtteilungsmodul (40) umfasst, das Lichtteilungsmodul (40) eine zweite Linse (18), einen ersten Teiler (14), eine erste Kamera (20) und eine zweite Kamera (22) umfasst und die zweite Linse (18), der erste Teiler (14) und die erste Kamera (20) nacheinander entlang einer optischen Achse der zweiten Linse (18) angeordnet sind, wobei das Lichtteilungsmodul (40) ferner ein Kompensationselement (38) umfasst, das zwischen dem ersten Teiler (14) und der ersten Kamera (20) positioniert ist, und die erste Kamera (20) den zweiten Lichtstrahl empfängt, der durch das Kompensationselement (38) hindurchtritt, um das erste Bild zu erfassen, das Kompensationselement (38) eine parallele flache Platte oder ein dichroitischer Spiegel ist und zum Kompensieren von Astigmatismus konfiguriert ist, der in den zweiten Lichtstrahl eingebracht ist;
das Verfahren umfassend:
Emittieren eines kollimierten Lichtstrahls auf die zweite Linse (18) unter Verwendung eines Kollimators (50), umfassend ein Target (42), das Target (42) umfassend eine Vielzahl von Mustern;
Konvergieren des kollimierten Lichtstrahls auf den ersten Teiler (14) über die zweite Linse (18) und Aufteilen des kollimierten Lichtstrahls in einen zweiten Lichtstrahl und einen dritten Lichtstrahl über den ersten Teiler (14); Empfangen, durch die erste Kamera (20), des zweiten Lichtstrahls, um ein erstes Bild der Muster zu erfassen;
Empfangen des dritten Lichtstrahls durch die zweite Kamera (22), um ein zweites Bild der Muster zu erfassen; und
Einstellen eines Winkels und einer Position der ersten Kamera (20) und/oder der zweiten Kamera (22), um die Kontraste des ersten Bildes und des zweiten Bildes derart konsistent zu machen, dass eine Differenz zwischen MTF-Werten des ersten Bildes der Muster und des zweiten Bildes der Muster weniger als 10 % beträgt.

12. Verfahren nach Anspruch 11, wobei das Target (42) eine Vielzahl von Mustern aufweist und die Größe des ersten Bildes und/oder des zweiten Bildes nicht weniger als vierzig Prozent der Größe eines Bildes beträgt, das durch das optische System abgebildet ist.

13. Verfahren nach Anspruch 11, wobei das Kompensationselement (38) in einem eingeschlossenen Winkel von 45 Grad zu einer Ebene senkrecht zu dem ersten Teiler (14) angeordnet ist und die Ebene durch eine optische Achse (A) des zweiten Lichtstrahls und eine optische Achse (B) des dritten Lichtstrahls definiert ist.

## Revendications

1. Système optique (10), comprenant une première source de lumière (12), une première lentille (16), et un module de séparation de lumière (40), dans lequel le module de séparation de lumière (40) comprend un premier séparateur (14), une première caméra (20), et une seconde caméra (22) ;
la première lentille (16) est configurée pour recevoir un premier faisceau lumineux provenant de la première source de lumière (12) et pour collimater le premier faisceau lumineux sur un échantillon (24), et pour recevoir et collimater un faisceau lumineux provenant de l'échantillon (24) ;
le premier séparateur (14) est configuré pour séparer le faisceau lumineux en un deuxième faisceau lumineux et un troisième faisceau lumineux ;
la première caméra (20) est configurée pour recevoir le deuxième faisceau lumineux ; et
la seconde caméra (22) est configurée pour recevoir le troisième faisceau lumineux ;
dans lequel la première source de lumière (12) comprend un premier émetteur de lumière (13) configuré pour émettre le premier faisceau lumineux ;
la première source de lumière (12) comprend une troisième lentille (15), le système optique (10) comprend une quatrième lentille (17), dans lequel la troisième lentille (15) est configurée pour collimater le premier faisceau lumineux, dans lequel la quatrième lentille (17) est configurée pour focaliser le premier faisceau lumineux collimaté sur un plan focal arrière de la première lentille (16) et la première lentille (16) est configurée pour collimater le premier faisceau lumineux focalisé sur l'échantillon (24), le système optique (10) étant **caractérisé en ce que** le module de séparation de lumière (40) comprend une deuxième lentille (18), dans lequel la deuxième lentille (18) est configurée pour focaliser le faisceau lumineux collimaté de la première lentille (16) vers la première caméra (20) et la deuxième caméra (22), et dans lequel le premier séparateur (14) est configuré pour séparer le faisceau lumineux focalisé provenant de la deuxième lentille (18) en deuxième faisceau lumineux et troisième faisceau lumineux ; le système optique (10) comprend en outre un élément de compensation (38) positionné entre le premier séparateur (14) et la première caméra (20), et configuré pour compenser l'astigmatisme introduit dans le deuxième faisceau lumineux, dans lequel l'élément de compensation (38) est une plaque plane parallèle ou un miroir dichroïque.

2. Système optique (10) selon la revendication 1, dans lequel un deuxième séparateur (28) configuré pour recevoir le premier faisceau lumineux provenant de la première source de lumière (12) et pour dévier le premier faisceau lumineux vers la première lentille (16).

3. Système optique (10) selon la revendication 1 ou 2, comprenant un troisième séparateur (30) et un module de mise au point automatique (32) ;
le module de mise au point automatique (32) est configuré pour émettre un quatrième faisceau lumineux et pour recevoir le quatrième faisceau lumineux réfléchi par l'échantillon (24) ; et
le troisième séparateur (30) est configuré pour recevoir le quatrième faisceau lumineux et dévier le quatrième faisceau lumineux vers la première lentille (16), et est en outre configuré pour recevoir le quatrième faisceau lumineux réfléchi par l'échantillon (24) et pour dévier le quatrième faisceau lumineux réfléchi par l'échantillon (24) vers le module de mise au point automatique (32).

4. Système optique (10) selon la revendication 3, dans lequel le module de mise au point automatique (32) comprend une deuxième source de lumière (34) pour émettre le quatrième faisceau lumineux vers le troisième séparateur (30) et un récepteur (36) pour recevoir le quatrième faisceau lumineux réfléchi par l'échantillon (24).

5. Système optique (10) selon la revendication 3 ou 4, dans lequel la première lentille (16) est configurée pour faire converger le quatrième faisceau lumineux sur l'échantillon (24) ; et
la première lentille (16) est configurée pour collimater le quatrième faisceau lumineux réfléchi par l'échantillon (24) vers le troisième séparateur (30).

6. Système optique (10) selon la revendication 4, dans lequel la seconde source de lumière (34) comprend un second émetteur de lumière (35) configuré pour émettre le quatrième faisceau lumineux et une cinquième lentille (37), dans lequel la cinquième lentille (37) est configurée pour collimater le quatrième faisceau lumineux, et la cinquième lentille (37) est configurée pour faire converger le quatrième faisceau lumineux réfléchi par l'échantillon (24) vers le récepteur (36).

7. Système optique (10) selon l'une quelconque des revendications 1 à 6, dans lequel la première lentille (16) comprend plus d'une lentille, et/ou la deuxième lentille (18) comprend plus d'une lentille ; et/ou la première caméra (20) et la seconde caméra (22) sont agencées à 90 degrés ou 270 degrés.

8. Système optique (10) selon la revendication 2, dans lequel le deuxième séparateur (28) est configuré pour dévier le premier faisceau lumineux de 90 degrés.

9. Système optique (10) selon la revebdication 1, dans lequel l'élément de compensation (38) forme un angle inclus de 45 degrés par rapport à un plan perpendiculaire au premier séparateur (14), et le plan est défini par un axe optique (A) du deuxième faisceau lumineux et un axe optique (B) du troisième faisceau lumineux.

10. Système de séquençage, comprenant une plateforme (116) permettant de porter un échantillon (24) et le système optique (10) selon l'une quelconque des revendications 1 à 9.

11. Procédé permettant d'étalonner un système optique, dans lequel le système optique comprend un module de séparation de lumière (40), le module de séparation de lumière (40) comprend une deuxième lentille (18), un premier séparateur (14), une première caméra (20) et une seconde caméra (22), et la deuxième lentille (18), le premier séparateur (14) et la première caméra (20) sont agencés de manière séquentielle le long d'un axe optique de la deuxième lentille (18), dans lequel le module de séparation de lumière (40) comprend en outre un élément de compensation (38) positionné entre le premier séparateur (14) et la première caméra (20), et la première caméra (20) reçoit le deuxième faisceau lumineux traversant l'élément de compensation (38) pour acquérir la première image, l'élément de compensation (38) est une plaque plane parallèle ou un miroir dichroïque et est configuré pour compenser l'astigmatisme introduit dans le deuxième faisceau lumineux ;
le procédé comprenant :
l'émission d'un faisceau lumineux collimaté vers la deuxième lentille (18) au moyen d'un collimateur (50) comprenant une cible (42), la cible (42) comprenant une pluralité de motifs ;
la convergence du faisceau lumineux collimaté vers le premier séparateur (14) à travers la deuxième lentille (18) et la séparation du faisceau lumineux collimaté en un deuxième faisceau lumineux et un troisième faisceau lumineux à travers le premier séparateur (14) ; la réception, par la première caméra (20), du deuxième faisceau lumineux pour acquérir une première image des motifs ;
la réception, par la seconde caméra (22), du troisième faisceau lumineux pour acquérir une seconde image des motifs ; et
le réglage d'un angle et d'une position de la première caméra (20) et/ou de la seconde caméra (22) pour rendre les contrastes de la première image et de la seconde image cohérents, de telle sorte qu'une différence entre les valeurs MTF de la première image des motifs et de la seconde image des motifs est inférieure à 10 %.

12. Procédé selon la revendication 11, dans lequel la cible (42) présente une pluralité de motifs, et la taille de la première image et/ou de la seconde image n'est pas inférieure à quarante pour cent de la taille d'une image formée par le système optique.

13. Procédé selon la revendication 11, dans lequel l'élément de compensation (38) forme un angle inclus de 45 degrés par rapport à un plan perpendiculaire au premier séparateur (14), et le plan est défini par un axe optique (A) du deuxième faisceau lumineux et un axe optique (B) du troisième faisceau lumineux.
